# EUROPÄISCHE PATENTANMELDUNG

(11) **EP 2 902 745 A1**
(43) Veröffentlichungstag der Anmeldung: **05.08.2015**
(21) Anmeldenummer: 14167664.3
(22) Anmeldetag: 09.05.2014
(51) Int. Cl.: G01C 17/00, G01C 21/20, G01C 21/36, B60R 25/00

(54) **Mobiles elektronisches Gerät und Applikation zur Bestimmung der Richtung eines Zielortes**

(30) Priorität: 04.02.2014 DE 102014001320
(71) Anmelder: Enghard, Florian, 60437 Frankfurt am Main (DE)
(72) Erfinder: Engahrd, Florian, 60437 Frankfurt am Main (DE); Enghard, Armin, 60437 Frankfurt am Main (DE); Polat, Suat, 35606 Solms (DE)
(74) Vertreter: Wegner, Hans

(57) **Zusammenfassung**

Die vorliegende Erfindung bezieht sich auf ein mobiles elektronisches Gerät (X), eingerichtet zum Empfangen eines Zielortes (C) und zum Übermitteln eines Signals an einen Benutzer des mobilen elektronischen Geräts (X), wenn das mobile elektronische Gerät (X) auf den Zielort (C) zeigt unter Verwendung einer Kompassfunktion des mobilen elektronischen Geräts (X). Das mobile elektronische Gerät (X) kann beispielsweise ein Smartphone bzw. Mobiltelefon oder ein Fahrzeugschlüssel sein.

## Beschreibung

### 1. Technisches Gebiet

Die vorliegende Erfindung bezieht sich auf ein mobiles elektronisches Gerät, sowie auf eine entsprechende Applikation, insbesondere für ein Smartphone, Mobiltelefon, Handy oder ein ähnliches mobiles Endgerät (z.B. Tabletcomputer, PDA, usw.) zur Bestimmung der Richtung eines Zielortes, insbesondere zum (Wieder-)Auffinden von Personen, Tieren (z.B. Hunden) und/oder Gegenständen (z.B. einem geparkten Auto).

### 2. Technischer Hintergrund

Es gibt derzeit viele Navigations- und Standortapplikationen sowie entsprechende Computerprogramme und elektronische Geräte zur Navigation am Markt.

Solche Navigationslösungen funktionieren üblicherweise per Wegführung, d.h. ein Benutzer wird mittels Navigationshinweisen von seinem aktuellen Standort aus zu einem gewünschten Zielort geführt. Dabei wird dem Benutzer auf dem Bildschirm seines Gerätes eine Karte mit entsprechend hervorgehobenem Weg angezeigt. Weiterhin wird dem Benutzer sein aktueller Standort gemäß dem Wegverlauf dargestellt. Somit weiß der Benutzer, an welchem Ort er sich befindet und welchen Weg er einschlagen muss, um an das gewünschte Ziel zu gelangen. Voraussetzung hierfür ist, dass das Navigationsgerät (z.B. ein Smartphone, ein Mobiltelefon, ein dediziertes Navigationsgerät oder Ähnliches) über entsprechendes Kartenmaterial verfügt.

Existierende Navigationsapplikationen liefern dem Benutzer üblicherweise eine visuelle Rückmeldung über den Standort und den Wegverlauf und geben visuelle und/oder audiobasierte Anweisungen, an welchen Stellen ein Benutzer wie abbiegen muss, um an den gewünschten Zielort zu gelangen. Beispielsweise wird dem Benutzer mitgeteilt, ob er an einer Kreuzung links oder rechts abbiegen muss.

Solche existierenden kartenbasierten Navigationslösungen haben jedoch eine Reihe von Nachteilen:
Existieren für ein Gebiet keine Kartendaten, wie z.B. für einen Wald, einen Strand, einen Großraumparkplatz, einen Campingplatz, ein Konzert- oder Festivalgelände oder Ähnliches, ist eine kartenbasierte Wegführung ungenau bzw. überhaupt nicht möglich. In einer Umgebung, in der die Sicht auf den Bildschirm (z.B. durch erhöhte Sonneneinstrahlung) erschwert wird oder in einer Umgebung, in der audiobasierte Anweisungen aufgrund einer hohen Umgebungslautstärke nicht verstanden werden können oder aus anderen Gründen unerwünscht sind, ist eine herkömmliche Wegführung nicht ohne Weiteres durchführbar.

Ferner fordern übliche kartenbasierte Navigationslösungen vom Benutzer einen stetigen Vergleich des angezeigten Kartenmaterials mit der realen Umgebung und ein entsprechendes Umsetzen der angezeigten Wegführung in Aktionen des Benutzers. Dies ist einerseits ungenau und fehleranfällig, da eine falsche Abbiegung üblicherweise erst erkannt wird, nachdem der Benutzer bereits eine gewisse Strecke in der falschen Richtung zurückgelegt hat. Andererseits birgt das Betrachten des Bildschirms ein Sicherheitsrisiko, da hierbei Gefahren in der realen Umwelt übersehen werden können (beispielsweise kann der Benutzer leicht gegen einen Baum oder ein Verkehrsschild laufen).

Auch Systeme, welche dem Benutzer eine ungefähre Richtungsangabe anzeigen, sind im Stand der Technik bekannt. Beispielsweise beschreibt die US-Patentanmeldung US 2010/0073201 A1 ein System zum Auffinden eines Fahrzeugs mittels eines Mobiltelefons. Auf dem Bildschirm des Mobiltelefons wird eine Landkarte angezeigt, auf der die aktuelle Position des Benutzers und die des Fahrzeugs eingezeichnet sind. Ferner kann dem Benutzer ein Pfeil auf dem Bildschirm angezeigt werden, welcher die Richtung angibt, in welche der Benutzer sich bewegen muss, um zu seinem Fahrzeug zu gelangen. Die kanadische Patentanmeldung CA 2 772 058 A1 beschreibt ein ferngesteuertes System zum Auffinden eines Fahrzeugs. Auf dem Bildschirm eines Mobiltelefons wird ein kompassartiger Pfeil angezeigt, welcher in die Richtung des geparkten Fahrzeugs weist. Ein programmierbarer Ton wird erzeugt, dessen Abstände mit abnehmender Distanz zum Fahrzeug kürzer werden. Auch diese Lösungen sind jedoch ungenau und fehleranfällig, da auch hier der Benutzer den angezeigten Richtungspfeil mit seiner realen Umwelt in Einklang bringen und aus den angezeigten Informationen reale Bewegungsaktionen ableiten muss.

Der vorliegenden Erfindung liegt deshalb das Problem zugrunde, eine verbesserte Lösung zur Bestimmung eines Zielortes bereitzustellen, welche es ermöglicht, einen Benutzer exakter und intuitiver an einen gewünschten Ort zu führen und welche die oben angesprochenen Nachteile des Stands der Technik zumindest zum Teil überwindet.

### 3. Zusammenfassung der Erfindung

Dieses Problem wird gemäß einem ersten Aspekt der Erfindung durch ein mobiles elektronisches Gerät gelöst. In der Ausführungsform gemäß Anspruch 1 ist das mobile elektronische Gerät eingerichtet zum:
a. Empfangen eines Zielortes; und
b. Übermitteln eines Signals an einen Benutzer des mobilen elektronischen Geräts, wenn das mobile elektronische Gerät auf den Zielort zeigt unter Verwendung einer Kompassfunktion des mobilen elektronischen Geräts.

Das mobile elektronische Gerät (nachfolgend der Einfachheit halber "Gerät" genannt) kann unter Verwendung einer Kompassfunktion einen Zielort ausmachen. Hierfür kann beispielsweise ein im Gerät verbauter Kompass (beispielsweise ein Magnetkompass oder ein elektronischer Kompass) zum Einsatz kommen, oder beispielsweise im Falle eines Smartphones oder eines ähnlichen elektronischen Mobilgeräts eine Kompassfunktion (im Android-Betriebssystem beispielsweise "Sensor.getOrientation()"), welche Sensoren wie Magnetfeldsensoren, Bewegungssensoren, Beschleunigungssensoren und/oder andere Sensoren zur Lage- und/oder Positionsbestimmung verwendet. Dabei fungiert das Gerät als eine Art Zeiger, ähnlich wie eine Wünschelrute. Ist das Gerät auf den gewünschten Zielort ausgerichtet, so wird einem Benutzer ein Signal übermittelt anhand dessen der Benutzer erkennt, dass das Gerät auf den Zielort zeigt bzw. auf den Zielort ausgerichtet ist. Das Signal wird bevorzugt ausgegeben, sobald das Gerät korrekt ausgerichtet ist.

Der Begriff "auf den Zielort zeigen" ist so zu verstehen, dass das Gerät nicht exakt auf den Zielort zeigen muss, sondern dass das Signal ausgegeben wird, sobald eine Zeigerichtung des Gerätes innerhalb eines vorgegebenen Schwenkbereichs liegt, wobei der Schwenkbereich bevorzugt ungefähr 1 bis 2 cm beträgt. So ist auch bei großen Entfernungen zum Zielort sichergestellt, dass das ausgegebene Signal ausreichend "stabil" ist und nicht gleich bei der kleinsten Bewegung wieder verstummt.

Das Übermitteln eines Signals an den Benutzer, wenn das Gerät auf den Zielort zeigt, verbessert signifikant die Leistungsfähigkeit von Navigationslösungen, zum einen dadurch, dass eine Navigation auch ohne Kartendaten ermöglicht wird und zum anderen dadurch, dass dem Benutzer nicht nur visuell oder audiobasiert (z.B. mittels Sprachausgabe) signalisiert werden kann, dass er sich auf dem richtigen Weg befindet, sondern auch durch haptische Rückmeldung (z.B. eine Vibration). Dadurch wird es ermöglicht, auch in Gebieten, für die keine Kartendaten existieren, eine Navigationslösung bereitzustellen. Weiterhin ermöglicht die Erfindung auch bei widrigen Umständen, die eine Sicht auf den Bildschirm erschweren (z.B. durch starke Sonneneinstrahlung, einen verschmutzten Bildschirm oder Ähnliches), Rückmeldungen zu empfangen. Zum Beispiel wird dem Benutzer durch Vibration signalisiert, dass er korrekt auf den Zielort ausgerichtet ist. Dadurch wird es zusätzlich ermöglicht, das Gerät auch in lauten Umgebungen einzusetzen, an denen eine audiobasierte Rückmeldung nicht zu hören wäre. Beispielsweise kann somit auf einem Konzert sicher zu einem gewünschten Zielort bzw. einer Zielperson navigiert werden.

Zusätzlich wird die Zielführung im Vergleich zum Stand der Technik merklich vereinfacht. Ein ständiges, oftmals kompliziertes Abgleichen der Karte bzw. eines Richtungspfeils mit der realen Umgebung entfällt. Durch simples Schwenken des Geräts kann ein Benutzer sich intuitiv auf den gewünschten Zielort, unabhängig von der korrekten Interpretation von Kartendaten, ausrichten.

Die Zielführung wird durch das erfindungsgemäße Gerät auch präziser und weniger fehleranfällig. Die Ausrichtung auf einen Zielort anhand einer Karte kann kompliziert und daher auch fehlerbehaftet sein, z.B. wenn ein Benutzer die Kartendaten falsch interpretiert. Durch das erfindungsgemäße Gerät erhält der Benutzer eine sofortige Rückmeldung, wenn er auf den gewünschten Zielort ausgerichtet ist bzw. wenn das Gerät auf den Zielort zeigt. Ein Verlaufen durch Fehlinterpretation von Kartendaten wird dadurch verhindert.

Die beschriebene Lösung verringert ferner die Unfallgefahr. Während ein Benutzer bei kartenbasierter Navigation ständig die Karte beobachten muss, so kann er unter Verwendung des erfindungsgemäßen Geräts seinen Blick auf die Umgebung, z.B. auf den Straßenverkehr richten. Dies wird insbesondere durch eine audiobasierte und/oder haptische Rückmeldung über einen korrekt eingeschlagenen Weg ermöglicht. Dadurch kann beispielsweise verhindert werden, dass der Benutzer wegen dem ständig auf den Bildschirm gerichteten Blick mit anderen Fußgängern zusammenstößt, eine rote Fußgängerampel übersieht oder mit anderen Hindernissen kollidiert.

Das erfindungsgemäße Gerät zeichnet sich ferner durch eine besonders simple und damit elegante Implementierung aus, da sie den Kompass bzw. die Kompassfunktion des Geräts nutzt. In einer besonders bevorzugten Ausführungsform werden somit keine Kartendaten benötigt, was die Ressourcen des Geräts schont.

In einer bevorzugten Ausführungsform weist das Gerät neben der Kompassfunktion ferner ein Mittel zur Bestimmung der eigenen Position / des eigenen Standorts auf (beispielsweise einen GPS-Sensor). Das Gerät benutzt dann als Eingabedaten die eigene momentane Position und die empfangene Position des Zielortes (beides beispielsweise durch geographische Koordinaten kodiert) und berechnet daraus eine Richtungsangabe, d.h. die Luftlinie, von der eigenen Position zur Zielposition (beispielsweise in Form einer Gradangabe). Diese berechnete Richtungsangabe wird dann mit der vom Kompass ermittelten momentanen Ausrichtung des Geräts (beispielsweise ebenfalls in Form einer Gradangabe) verglichen und das Signal wird erzeugt, sobald die berechnete Richtungsangabe mit der ermittelten momentanen Ausrichtung in Deckung kommt (vorzugsweise innerhalb des oben beschriebenen Schwenkbereichs). Anstatt von oder zusätzlich zu einem GPS-Sensor kann das Gerät die eigene Position beispielsweise auch über eine Mobilnetzzelle und/oder eine drahtlose Verbindung (z.B. WiFi-Datenbank) bestimmen.

Zusätzlich oder alternativ ist auch eine Positionsbestimmung mittels eines Geocoding-Dienstes möglich. Somit kann das Gerät beispielsweise einen (externen) Geocoding-Dienst nutzen und so die geografischen Koordinaten der aktuellen Adresse und/oder des Ziels ermitteln. Dieser Aspekt ist besonders vorteilhaft in Szenarien, in welchen beispielsweise aufgrund schlechter Empfangsbedingungen keine GPS-Satelliten gefunden werden können.

Das mobile elektronische Gerät kann in verschiedenen Ausprägungen ausgebildet sein. Beispielsweise kann das Gerät ein Fahrzeugschlüssel sein (für ein Auto, Motorrad, oder ähnliches), vorzugsweise ein bei modernen Fahrzeugen gebräuchlicher Funkschlüssel. Eine solche Ausführungsform eignet sich besonders vorteilhaft zum Auffinden des Fahrzeugs des Benutzers, da der Benutzer den Schlüssel in diesem Szenario bei sich trägt und somit kein zusätzliches Gerät mitführen muss.

In einer besonders bevorzugten Ausführungsform ist das Gerät ein Smartphone oder Mobiltelefon. Dies erlaubt neben dem oben beschriebenen Fahrzeug-Szenario beispielsweise auch ein besonders einfaches Auffinden anderer Personen, deren Zielort das Smartphone bzw. Mobiltelefon empfangen hat. Selbstverständlich eignen sich auch andere moderne mobile elektronische Geräte für die vorliegende Erfindung, wie beispielsweise Tablets, PDAs, oder dergleichen.

Unabhängig von der oben beschriebenen konkreten Ausgestaltung des mobilen elektronischen Geräts können Ausführungsformen der vorliegenden Erfindung einige oder alle der nachfolgenden Aspekte aufweisen:
Zum Beispiel kann das an den Benutzer übermittelte Signal ein Audiosignal, ein Vibrationssignal, ein Lichtsignal (beispielsweise ein Aufblitzen des Kamerablitzes des Smartphones) und/oder ein Anzeigesignal umfassen, letzteres in der Ausführungsform als Smartphone oder Mobiltelefon als Anzeige auf einem Bildschirm des Smartphones oder Mobiltelefons. Wie oben bereits beschrieben ermöglicht der Einsatz unterschiedlicher Signalarten es auch unter widrigen Umständen, dem Benutzer eine für ihn empfangbare Rückmeldung zu liefern. Besonders bevorzugt ist die Signalisierung der korrekten Ausrichtung des Geräts durch ein Vibrationssignal, denn dies ermöglicht eine besonders einfache, aber dennoch eingängliche Rückmeldung an den Benutzer und somit eine gleichermaßen intuitive und präzise Zielführung. Denn bei Verwendung eines Vibrationssignals muss der Benutzer sein Gerät lediglich in die ungefähr vermutete Zielrichtung schwenken und das Gerät vibriert in dem Moment, in dem es korrekt ausgerichtet ist, d.h. auf den Zielort zeigt, ohne dass der Benutzer das Display ansehen muss oder eine dort herkömmlich angezeigte Karte mit seiner realen Umwelt abgleichen muss.

Ein zusätzlicher Aspekt der Erfindung ist, dass das Gerät die Entfernung des Zielorts angeben kann. Durch Angabe der Entfernung wird der Benutzer darüber informiert, wie weit der gewünschte Zielort entfernt ist. Dabei kann dem Benutzer die Entfernung in unterschiedlichen Maßeinheiten (z.B. in Metern, Kilometern usw.) angezeigt werden. Dadurch kann der Benutzer abschätzen, wann er den gewünschten Zielort erreichen wird.

In einem weiteren Aspekt kann das erfindungsgemäße Gerät den Zielort durch manuelle Eingabe empfangen. Der Benutzer kann durch manuelle Eingabe eines Zielortes festlegen, wohin er navigieren möchte. Dabei kann der Zielort z.B. in Form von Koordinaten (Längen- und Breitengrad oder ähnliches) eingegeben werden. Möglich ist aber auch eine abstrakte Eingabe eines Zielorts, z.B. können Orte wie "Semper-Oper" oder "McDonald's Restaurant" eingegeben werden. Bei Eingabe eines abstrakten Ortes kann beispielsweise ein Smartphone oder Mobiltelefon seine Onlinefähigkeit nutzen, über gängige Suchmaschinen und/oder den oben genannten Geocoding-Dienst den tatsächlichen Ort, z.B. in Form einer Koordinate, recherchieren und den Benutzer zur gewünschten Zielkoordinate navigieren. Denkbar ist auch, dass im Falle eines Smartphones oder Mobiltelefons der Benutzer ein Foto eines markanten Ortes oder Gebäudes macht, und daraufhin die Koordinaten bestimmt werden.

Zusätzlich oder alternativ kann das erfindungsgemäße Gerät den Zielort über eine Verbindung empfangen. Neben der oben beschriebenen manuellen Eingabe eines Zielortes kann dieser auch in der Form einer über eine Verbindung übermittelten Nachricht durch das Gerät empfangen werden. Dabei kann die Verbindung beispielsweise über Bluetooth, NFC, WLAN, UMTS, LTE, GSM oder sonstige Verbindungsarten hergestellt werden. Die Nachricht kann z.B. eine SMS oder ein Datenpaket sein. Beispielsweise kann ein anderer Benutzer dem Benutzer des erfindungsgemäßen Gerätes über eine solche Verbindung/Nachricht seinen aktuellen Aufenthaltsort schicken und der Benutzer des Gerätes kann diesen dann einfach auffinden.

Ein weiterer Aspekt der Erfindung ist, dass das Gerät den eigenen Standort als späteren Zielort benutzen kann. Somit kann das Gerät seinen aktuellen Standort bestimmen, z.B. mittels eines GPS-Moduls. Der dadurch bestimmte Standort kann durch das Gerät gespeichert werden. Der Standort kann z.B. der Ort sein, an dem der Benutzer des Geräts sein Fahrzeug geparkt hat. Jeder andere Ort, an den der Benutzer später zurückkommen möchte, ist ebenfalls denkbar. Durch die Speicherung wird es dem Benutzer ermöglicht, den gespeicherten Ort später als Zielort aufzurufen und sich von dem Gerät zu diesem zurückführen zu lassen.

Gemäß einem zusätzlichen Aspekt kann das erfindungsgemäße Gerät eingerichtet sein zum Speichern des eigenen Standortes bei Unterbrechung einer Verbindung zu einem zweiten elektronischen Gerät. Beispielsweise kann das Gerät mittels Bluetooth mit dem Auto des Benutzers verbunden sein. Entfernt sich nun der Benutzer von seinem geparkten Auto, so wird die Bluetooth-Verbindung bei Überschreiten der Verbindungsreichweite getrennt. Diese Verbindungstrennung veranlasst das Gerät, den Standort, an dem sich der Benutzer und somit auch sein Auto befindet, automatisch zu speichern. Dadurch wird die Anwendung des Geräts vereinfacht, da so eine automatische Speicherung des Standorts eines Autos ermöglicht wird. Der Benutzer muss somit nicht an die Speicherung denken, da diese automatisch ausgeführt wird. Neben Bluetooth-Verbindungen sind selbstverständlich auch andere drahtlose sowie kabelgebundene Verbindungen möglich (beispielsweise eine Verbindung zur Freisprecheinrichtung des Autos). Beispielsweise könnte das Gerät mittels USB oder anderen kabelgebundenen Verbindungen mit einem Auto verbunden sein. Beim Abziehen des Kabels kann dann, wie oben beschrieben, ebenfalls automatisch der Standort lokalisiert und von dem Gerät gespeichert werden. Selbstverständlich ist der obige Aspekt nicht auf Autos beschränkt, sondern kann gleichermaßen beispielsweise in Heimsystemen oder Arbeitsplätzen zum Einsatz kommen.

Ein weiterer Aspekt des erfindungsgemäßen Geräts ist es, dass dieses ferner eingerichtet sein kann zum Speichern des eigenen Standortes beim Empfangen eines markanten Audiosignals, beispielsweise des Zuschlagens einer Autotür. Wenn der Benutzer das Gerät in einem Auto mitführt, dieses aber weder kabelgebunden noch drahtlos mit dem Auto verbunden ist, so kann beim Parken des Autos der Standort trotzdem automatisch gespeichert werden. Dies geschieht durch Detektion eines markanten Audiosignals, z.B. verursacht durch das Zuschlagen einer Autotür. Denkbar sind aber auch andere Geräusche jeglicher Art. Durch das Geräusch des Zuschlagens der Autotür wird das Gerät dazu veranlasst, den aktuellen Standort zu bestimmen und zu speichern.

Ein zusätzlicher Aspekt der Erfindung ist, dass das Gerät mit zumindest einem zweiten elektronischen Gerät mit einem integrierten Chip zur Positionsbestimmung des Zielorts zusammenarbeiten kann. Ein Zielort kann beispielsweise durch ein zweites elektronisches Gerät mit einem integrierten Chip, z.B. ein GPS-Modul, festgestellt und an das erste Gerät übertragen werden. Dieses Zusammenspiel des erfindungsgemäßen Geräts mit einem oder mehreren "Zielgeräten" eröffnet zahlreiche vorteilhafte Anwendungsfelder:
Beispielsweise kann das zweite elektronische Gerät ein anderes Smartphone oder Mobiltelefon sein. So kann beispielsweise ein anderer Benutzer, der über ein Smartphone bzw. Mobiltelefon verfügt, seine Position feststellen und an den Benutzer des ersten Geräts übermitteln. Dadurch ist der Benutzer des ersten Geräts in der Lage, den anderen Benutzer zu finden.

Das zweite elektronische Gerät kann auch einen Anhänger, ein Band oder eine andere tragbare Form aufweisen. Die tragbare Form ermöglicht es, das zweite elektronische Gerät leicht mitführen zu können. So kann beispielsweise das zweite elektronische Gerät in einem Anhänger, in einem Hundehalsband oder in anderen tragbaren Teilen integriert sein, wie z.B. in Schmuck, in Uhren (insbesondere den derzeit aufkommenden "Smart Watches") oder in Accessoires jeglicher Art. Im Falle einer Smart Watch kann besonders vorteilhaft der Benutzer seinen Arm als Wünschelrute nutzen. Eine solche Smart Watch kann speichern, ob der Benutzer Links- oder Rechtshänder ist, sodass die hierin beschriebenen Funktionen entsprechend abgeglichen werden können.

Ebenso kann das zweite elektronische Gerät in einem Auto integriert sein, vorzugsweise in einem Navigations- oder Radiogerät. Neben der tragbaren Form des zweiten elektronischen Geräts ist auch die Integration in Navigations- oder Radiogeräte möglich, wie sie beispielsweise in Autos zu finden sind. Durch die Autobatterie ist eine ständige Stromversorgung gewährleistet. Auch wenn die Position des Autos zuvor nicht gespeichert wurde, so ist das Auto jederzeit auffindbar, da es seinen Standort durch das integrierte elektronische Gerät jederzeit an das erste Gerät des Benutzers übermitteln kann.

Ein zusätzlicher Aspekt der Erfindung ist, dass das zweite elektronische Gerät einen Aufkleber mit Solarfunktion umfasst. Sollte ein Auto weder über ein Navigations- oder Radiogerät zu Positionsfeststellung verfügen, so kann diese Funktionalität mittels eines Aufklebers mit Solarfunktion bereitgestellt werden. Ein solcher Aufkleber kann beispielsweise in einer der Ecken der Windschutzscheibe angebracht werden. Durch Sonneneinstrahlung wird dieser mit Strom versorgt und ist dadurch in der Lage, die Position an das erste Gerät zu übermitteln. Der Aufkleber kann auch an anderen Gegenständen angebracht werden, wie z.B. an einem Fahrrad, an einem Motorrad oder an sonstigen Gegenständen.

Gemäß einem weiteren Aspekt kann das erfindungsgemäße Gerät eingerichtet sein zum Anzeigen, ob der Weg zum Zielort frei oder durch ein oder mehrere Hindernisse versperrt ist. Das Gerät zeigt somit neben der Richtung des Zielortes zusätzlich an, ob der direkte Weg (d.h. die Luftlinie) durch Hindernisse, z.B. in Form von Gebäuden, Bäumen oder sonstigen Hindernissen versperrt ist. Die Anzeige kann z.B. durch einen rot eingefärbten Richtungspfeil oder sonstige visuelle Signale, durch Audiosignale oder durch haptische Rückmeldung geschehen. Die Anzeige ermöglicht es dem Benutzer, um etwaige Hindernisse herum navigieren zu können.

In diesem Fall kann das Gerät ferner eingerichtet sein zum Bereitstellen einer Wegführung um das eine oder die mehreren Hindernisse. Im Falle eines versperrten direkten Weges zum gewünschten Zielort kann das Gerät dem Benutzer eine konkrete Wegführung, z.B. kartenbasiert, bereitstellen. Durch eine kartenbasierte Wegführung wird dem Benutzer des Geräts ein möglichst schneller oder kurzer Weg zum Zielort angezeigt. Der Benutzer kann dann dem angezeigten Wegverlauf folgen, bis er den gewünschten Zielort erreicht. Die Anzeige kann in diesem Fall eine Anzeige der Entfernung auf dem direkten Weg zum Zielort (d.h. der Luftlinie) und/oder der Entfernung auf dem vorgeschlagenen "Umgehungsweg" umfassen.

Die vorliegende Erfindung betrifft ferner eine Applikation (d.h. eine Anwendung, ein Programm, ein Computerprogrammprodukt oder ähnliches, üblicherweise "App" genannt), die zur Ausführung auf einem Smartphone bzw. Mobiltelefon (oder vorzugsweise jeder anderen Art von mobilem elektronischen Gerät) geeignet ist und alle oder einen Teil der oben beschriebenen Funktionalitäten bereitstellt.

### 4. Beschreibung der Zeichnungen

Im Folgenden werden bevorzugte Ausführungsbeispiele der vorliegenden Erfindung unter Bezugnahme auf die begleitenden Figuren erläutert:
- Fig. 1:: Schematische Darstellung der Bestimmung der Richtung eines Zielorts und der Signalisierung, wenn ein Benutzer bzw. ein mobiles elektronisches Gerät (z.B. Smartphone oder Mobiltelefon) korrekt auf den Zielort ausgerichtet ist gemäß einer Ausführungsform der Erfindung;
- Fig. 2:: Schematische Darstellung verschiedener zweiter Geräte, die ihre Position an das erfindungsgemäße mobile elektronische Gerät (z.B. Smartphone oder Mobiltelefon) übermitteln können gemäß einer Ausführungsform der Erfindung;
- Fig. 3a-3c:: Bildschirmansichten einer exemplarischen Applikation für ein mobiles elektronisches Gerät (z.B. Smartphone) gemäß einer Ausführungsform der Erfindung; und
- Fig. 4:: Schematische Darstellung eines Schwenkbereichs gemäß einer Ausführungsform der Erfindung.

### 5. Beschreibung bevorzugter Ausführungsformen

Nachfolgend werden Aspekte der vorliegenden Erfindung im Kontext einer bevorzugten Ausführungsform beschrieben, bei welcher das mobile elektronische Gerät ein Smartphone oder Mobiltelefon ist, wobei die beschriebenen Funktionalitäten durch eine Applikation ("App") bereitgestellt werden, welche auf dem Smartphone oder Mobiltelefon ausgeführt wird. Es sei jedoch betont, dass die nachfolgend beschriebenen Aspekte nicht auf eine Applikation für ein Smartphone oder Mobiltelefon beschränkt sind, sondern in anderen Ausführungsformen ebenso eingesetzt werden können, insbesondere in einem mobilen elektronischen Gerät in Form eines Fahrzeugschlüssels. Um den oben genannten Stand der Technik zu verbessern, ist es wünschenswert, eine Navigation nicht nur kartenbasiert durchzuführen, sondern einem Benutzer mittels eines Signals mitzuteilen, ob (und vorzugsweise sobald) er auf den gewünschten Zielort ausgerichtet ist. Mittels einer Applikation, die auf einem Smartphone oder Mobiltelefon installiert sein kann, wird dem Benutzer visuell, haptisch und/oder audiobasiert mitgeteilt, ob er bzw. das Smartphone oder Mobiltelefon in die Richtung eines gewünschten Zielortes zeigt. Das Smartphone oder Mobiltelefon dient also als Zeiger bzw. als Suchwerkzeug. Das erfindungsgemäße Prinzip ähnelt dem einer Wünschelrute. Dabei wird vorzugsweise das obere Ende (Spitze) auf den Zielort ausgerichtet.

Die Applikation kann dazu genutzt werden, Freunde im Umkreis zu finden, die sich z.B. in einem Einkaufszentrum, im Wald, in der Stadt, am Strand oder an ähnlichen Orten befinden.

Die Applikation nutzt die in einem Smartphone oder Mobiltelefon vorhandene Kompassfunktion, um die Richtung zum gewünschten Standort zu lokalisieren. Diese Funktion kann in einigen Ausführungsformen zusätzlich verbessert werden, indem auch andere Sensordaten zur Bestimmung der Richtung miteinbezogen werden. Die Kompassdaten können beispielsweise durch Sensordaten eines Gyroskops, eines GPS-Moduls oder eines Accelerometers ergänzt werden. Denkbar sind hier alle Arten an Inertialsensoren. Die ausgelesenen Inertialsensordaten können dann fusioniert und gegebenenfalls gefiltert werden. Eine Filterung dient zur Verbesserung des Messergebnisses hinsichtlich der Position des Benutzers des Smartphones oder des Mobiltelefons. Hierbei werden vermeintlich schlechte Messergebnisse aus der Gesamtmenge herausgefiltert. Zum Einsatz können hier beispielsweise der so genannte Kalman-Filter oder auch der Partikelfilter kommen. Denkbar sind auch alle anderen Filterarten. Durch Sensorfusion und Filterung lässt sich die Genauigkeit der Positionsbestimmung des Mobiltelefons oder Smartphones signifikant verbessern. Dadurch wird eine noch präzisere Richtungsangabe zum Zielort möglich. Der Einsatz solcher Verfahren ist besonders sinnvoll in Umgebungen, die einen Kompass negativ beeinflussen können. Möglich ist dies z.B. durch Magnetfelder oder sonstige Störsignale. Durch Verwendung aller in einem Smartphone oder Mobiltelefon enthaltenen Inertialsensoren (oder zumindest einer Teilmenge derselben) wird die Robustheit der Applikation bezüglich der Richtungsdetektion des Zielorts optimiert.

Nachdem ein gewünschter Zielort definiert wurde, kann der Benutzer der Applikation eine Drehung (bevorzugt bis maximal 360°) durchführen. Alternativ kann er das Smartphone oder Mobiltelefon um die eigene Achse schwenken, oder in einem Bereich, in dem der Benutzer den gesuchten Zielort vermutet. Sobald das Smartphone oder Mobiltelefon korrekt auf den Zielort ausgerichtet ist, wird dem Benutzer eines der oben beschriebenen Signale übermittelt, bevorzugterweise eine Vibration. Dadurch weiß der Benutzer exakt und intuitiv, in welcher Richtung der Zielort liegt.

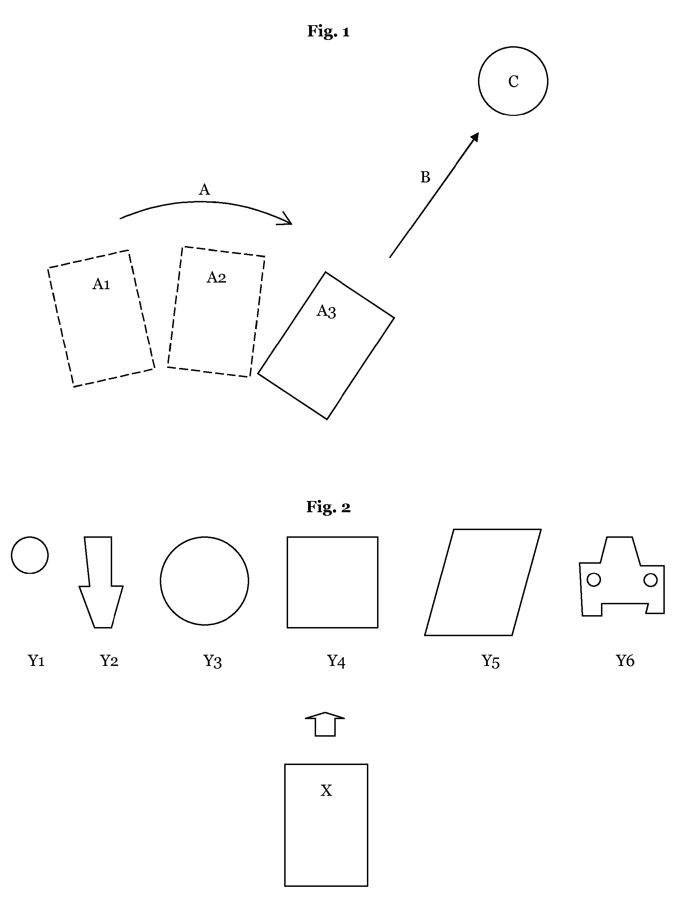

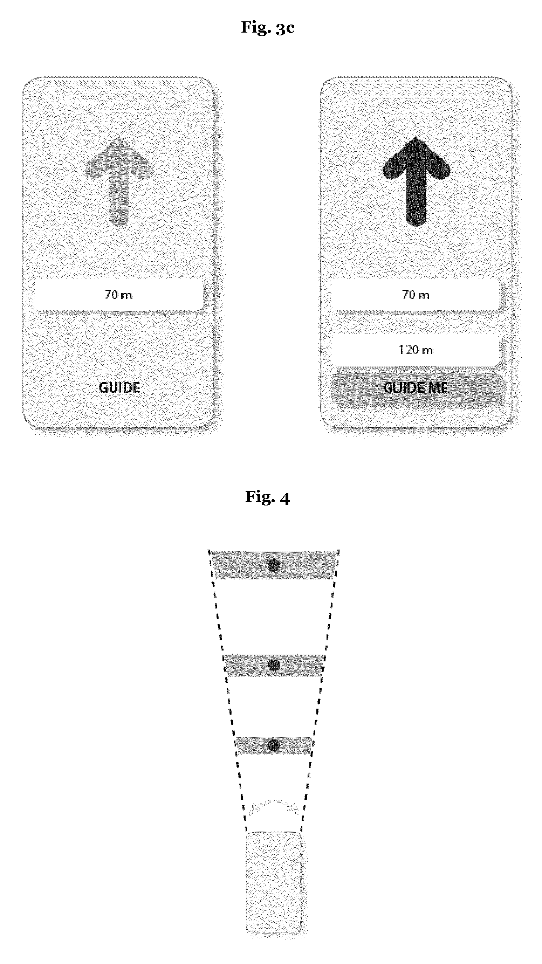

Fig. 1 illustriert den gerade beschriebenen Vorgang, d.h. die Suchfunktonsweise zwischen dem Handy/App X als Tool und dem gesuchten Ort C. Das Smartphone oder Mobiltelefon X wird von einer Position A1 (in der es nicht auf den Zielort C zeigt) über eine Position A2 (ebenfalls nicht auf den Zielort C ausgerichtet) bis hin zu einer Position A3 geschwenkt. Die Schwenkrichtung A führt in Fig. 1 von links nach rechts. Wenn die Position A3 erreicht ist, so ist das Smartphone oder Mobiltelefon X auf den gewünschten Zielort C ausgerichtet und das Signal wird ausgegeben. Ein Benutzer muss somit nur der Luftlinie B folgen, um an den gewünschten Zielort C zu gelangen. Der bereits eingangs erläuterte Schwenkbereich, in dem das Gerät X als "auf den Zielort ausgerichtet" betrachtet wird, ist in Fig. 4 dargestellt, wobei die Punkte jeweils den Zielort anzeigen.

Der gewünschte Zielort kann z.B. manuell in die Applikation eingegeben werden. Der Zielort kann beispielsweise durch eine Koordinate im GPS-Format oder im Galileo-Format eingegeben werden. Denkbar sind hier grundsätzlich alle Koordinatenformate. Weiterhin ist es auch möglich, dass der Benutzer einen Kartenservice und/ oder einen Geocoding-Dienst nutzt, z.B. Google Maps, und einen Zielort recherchiert, z.B. ein Restaurant oder Ähnliches, und die Position des Zielorts im Anschluss direkt an die Applikation übergeben wird.

Neben der manuellen Eingabe des Zielorts kann der Zielort der Applikation auch mittels einer Verbindung übermittelt werden. Denkbar sind hier alle bekannten drahtlosen Verbindungen, wie z.B. Bluetooth, WLAN, UMTS, LTE, GSM oder sonstige drahtlosen Verbindungen. Über die Verbindung wird ein entsprechendes Datenpaket, z.B. eine Nachricht, versendet. Im Inhalt der Nachricht kann dann wieder eine Koordinate, wie bereits oben beschrieben, enthalten sein. Diese wird von der Applikation entsprechend verarbeitet und als Zielort verwendet. Neben der Angabe in einem Koordinatenformat ist auch eine Angabe in jedem anderen Format zur Definition einer Position denkbar.

Das Smartphone oder das Mobiltelefon kann auch mit anderen elektronischen Geräten zusammenarbeiten. Bei dem anderen elektronischen Gerät kann es sich z.B. um einen Anhänger, ein Armband, eine Kette, eine Armbanduhr oder andere tragbare Accessoires handeln. Vorzugsweise sind diese mit einer Batterie bzw. mit einem Akku betrieben. Weiterhin kann ein elektronisches Gerät in einem Auto integriert sein, z.B. im Radio- oder im Navigationsgerät. Möglich ist auch ein elektronisches Gerät, welches über den Zigarettenanzünder Strom bezieht.

Die oben genannten elektronischen Geräte verfügen über einen integrierten Chip, der zu Positionsbestimmung dient. Die bestimmte Position kann dann als Zielort an die Applikation übermittelt werden. Der Benutzer der Applikation nutzt diese dann, um die Richtung der übertragenen Position, also die Richtung des Zielorts, zu bestimmen.

Bevorzugt ist auch ein elektronisches Gerät in Form eines Aufklebers mit Solarfunktion. Durch die Solarfunktion ist die Stromzufuhr garantiert. Auch der Aufkleber verfügt über die Fähigkeit, seine Position zu bestimmen und an die erfindungsgemäße Applikation zu übermitteln. Besagter Aufkleber kann an jedem Gegenstand angebracht werden, z.B. an einem Auto oder an einem Fahrrad.

Ein weiterer Aspekt der Erfindung ist, dass das elektronische Gerät in einem Hundehalsband integriert sein kann. Möglich ist auch eine Integration in Kleidungsstücken von Kindern.

Das oben beschriebene elektronische Gerät kann auch selbst ein Mobiltelefon oder Smartphone sein. Auf diesen könnte selbst eine Applikation installiert sein, welche die Bestimmung der Position erlaubt und in der Lage ist, diese an die erfindungsgemäße Applikation zu übermitteln. Dadurch können z.B. Freunde sich untereinander ihre gegenwärtige Position mitteilen. Ein Treffen auf einem Festival oder Musikkonzert wird dadurch merklich erleichtert. Idealerweise nutzen hierbei alle Teilnehmer dieselbe erfindungsgemäße Applikation.

Ferner ist eine weitere optionale Funktion der Erfindung das sogenannte "guide together". In diesem Fall wird bei zwei Benutzern, die sich finden möchten, eine Position zwischen diesen Benutzern als Zielposition ermittelt und die beiden Benutzer werden durch ihre jeweiligen Geräte zu dieser Zielposition geführt. Auch denkbar ist, dass durch die Erfindung nicht die Richtung des Zielortes signalisiert wird, sondern in Verbindung mit einer kartenbasierten Navigationsfunktion angezeigt wird, wann der Benutzer nach links oder rechts abbiegen muss.

Die erfindungsgemäße Zielführungsfunktion ist bevorzugt solange aktiv, bis der Benutzer den Zielort C erreicht hat. Beim Erreichen (und/oder kurz vorher) kann ein markantes Signal (beispielsweise ein Ton oder ein markantes Vibrationsmuster) über das Erreichen des Zielortes C informieren.

Fig. 2 illustriert eine Teilmenge der möglichen Geräte Y zur Übermittlung der Position an das Smartphone oder Mobiltelefon X. Die Position kann von einem durch eine Batterie oder Akku mit Strom versorgten elektronischen Gerät Y1 an das Smartphone übermittelt werden, idealerweise ein kleines loses Gerät Y1 mit Stromversorgung und Navikarte/Funktion. Möglich ist auch ein Gerät Y2, welches über den Zigarettenanzünder eines Autos mit Strom versorgt wird (mit oder ohne Navifunktion, vorzugsweise auch ausgestattet mit Ladefunktion für ein Handy). Neben den Geräten Y1 und Y2 kann auch ein Band Y3, z.B. in Form einer Kette, eines Rings oder in Form eines Halsbands zur Übermittlung der Position genutzt werden. Des Weiteren ist auch ein Aufkleber Y4 denkbar, welcher mittels einer Solarzelle mit Strom versorgt wird. Wie alle anderen Geräte auch, verfügt besagter Aufkleber Y4 ebenfalls über einen Chip, z.B. über ein GPS-Modul, zur Feststellung seiner Position. Die Position kann aber auch von einem weiteren Mobiltelefon oder Smartphone Y5 an das Smartphone oder Mobiltelefon X des Benutzers übermittelt werden. Denkbar ist auch ein in einem Auto Y6 integriertes Gerät, welche die Position des Fahrzeugs, z.B. mittels Bluetooth an das Smartphone oder Mobiltelefon des Benutzers übermittelt. Zur Übermittlung der durch die Geräte und Komponenten Y festgestellten Position an das Smartphone oder Mobiltelefon X wird z.B. eine drahtlose Verbindung genutzt (z.B. Bluetooth, GSM oder ähnliches). Denkbar ist aber auch eine Kabelgebundene Übertragung der Position.

Weiterhin kann die erfindungsgemäße Applikation den aktuellen Standort, z.B. unter Verwendung des GPS-Moduls, feststellen und speichern. Bewegt sich nun der Benutzer an einen anderen Ort, so kann er später den gespeicherten Ort als Zielort wählen und die Applikation dazu nutzen, sich zu besagtem Zielort führen zu lassen.

Zum Auslösen des Speicherns der aktuellen Position des Smartphones oder des Mobiltelefons können unterschiedliche Mechanismen dienen. Beispielsweise kann der Benutzer der Applikation einen Knopf oder einen virtuellen Knopf auf einem Touchscreen betätigen. Dies veranlasst die Applikation dann, den gegenwärtigen Standort zu speichern. Weiterhin kann die Applikation durch ein markantes Geräusch, wie z.B. das Zuschlagen einer Autotür, dazu veranlasst werden, eine Position zu speichern. Dies ermöglicht eine komfortable Nutzung der erfindungsgemäßen Applikation. Ein Benutzer muss somit nicht mehr aktiv werden, um eine Position seines geparkten Autos zu speichern. Sobald er aus seinem geparkten Auto aussteigt und die Türe schließt, wird die Position, durch Zuschlagen der Autotür, automatisch gespeichert. Die Applikation kann dies beispielsweise detektieren, indem das Mikrofon des Smartphones bzw. Mobiltelefons (im Hintergrund) aktiv ist und aufgenommene Audiosignale mit einem abgespeicherten "Sample" des markanten Signals abgeglichen werden (welches der Benutzer beispielsweise selbst aufgenommen hat, als er die Applikation das erste Mal mit seinem Auto genutzt hat). Der Vergleich des abgespeicherten "Samples" und des Audiosignals kann beispielsweise mittels Extraktion von Merkmalen, wie z.B. Frequenz oder Lautstärke, durchgeführt werden. Dabei werden dem Referenz-"Sample" die entsprechenden Merkmale entnommen und gespeichert. Im Anschluss daran werden einem Signal nach Aufnahme über das Mikrofon dieselben Merkmale entnommen. Die entnommenen Merkmale werden dann mit den gespeicherten Merkmalen, unter Berücksichtigung einer Toleranz, verglichen. Bei Übereinstimmung wird das aufgenommen Signal als erkannt deklariert und das Speichern der aktuellen Position ausgelöst.

Weiterhin kann auch ein Verbindungsabbruch zum Auslösen einer Positionsspeicherung dienen. Oftmals sind Smartphones oder Mobiltelefone mittels Bluetooth mit dem Entertainment-System eines Autos verbunden. Verlässt ein Benutzer sein Fahrzeug und entfernt sich von diesem, so wird die Bluetooth-Verbindung unterbrochen. Dieser Verbindungsabbruch kann dazu genutzt werden, um ein Speichern der aktuellen Position auszulösen. Selbstverständlich ist diese Funktion nicht auf die hier beschriebene Bluetooth-Verbindung oder den Einsatz in einem Fahrzeug beschränkt.

Weiterhin ist es möglich, dass ein Auto die durch z.B. durch sein Navigationsgerät zuletzt festgestellte Position an das Mobiltelefon oder an das Smartphone, respektive die Applikation, übermittelt. Hierzu kann z.B. eine drahtlose Verbindung genutzt werden. Diese Position kann später dazu verwendet werden, das Auto auf einem Großraumparkplatz wiederzufinden.

Dem Benutzer wird mittels eines Signals durch die erfindungsgemäße Applikation signalisiert, ob er auf den Zielort ausgerichtet ist oder nicht. Dies kann beispielsweise durch eine visuelle Anzeige geschehen. Beispielsweise kann auf dem Bildschirm des Smartphones oder Mobiltelefons einen Pfeil dargestellt sein. Dieser ist beispielsweise vollständig grün eingefärbt wenn der Benutzer korrekt auf den Zielort ausgerichtet ist. Sollte die Ausrichtung abweichen, so kann sich der Pfeil verfärben. Je weiter die Ausrichtung des Benutzers, respektive des Smartphones oder Mobiltelefons, von der idealen Ausrichtung abweicht, desto mehr verfärbt sich der Pfeil. Wenn der Benutzer in die genaue Gegenrichtung ausgerichtet ist, so wäre der Pfeil beispielsweise vollständig rot eingefärbt. Dreht sich nun der Benutzer und nähert sich somit der idealen Ausrichtung an, so wird dem Benutzer ein Pfeil mit einem Farbverlauf von rot nach grün dargestellt. Je besser die Ausrichtung auf den Zielort wird, umso größer wird der Grünanteil des Farbverlaufs. Neben Farbverläufen sind auch sonstige, sich graduell ändernde visuelle Effekte denkbar.

Dadurch dass z.B. die Sicht auf den Bildschirm eines Mobiltelefons oder Smartphones erschwert sein kann, z.B. durch starke Sonneneinstrahlung, ist es wünschenswert, dem Benutzer auch audiobasiert zu signalisieren, wie genau er auf den gewünschten Zielort ausgerichtet ist. Dies kann beispielsweise durch Sprachausgabe realisiert werden. Dabei kann dem Benutzer z.B. eine Gradzahl entsprechend der Abweichung mitgeteilt werden. Denkbar ist auch eine Signalisierung, die einem Parkassistenten, bekannt aus Autos, ähnelt. Dabei wird ein sich wiederholender Ton akustisch dargestellt. Je exakter der Benutzer bzw. das Smartphone oder Mobiltelefon auf den gewünschten Zielort ausgerichtet ist, desto kürzer werden die Abstände zwischen den einzelnen Tönen. Ist der Benutzer exakt auf den Zielort ausgerichtet, so wird ihm ein durchgehender Ton signalisiert. Ist der Benutzer in die genaue Gegenrichtung ausgerichtet, so könnte der Ton vollständig verstummen. Möglich ist auch eine Signalisierung über eine sich ändernde Lautstärke des Tons oder die Tonhöhe.

Ein ähnliches Prinzip wie oben beschrieben kann auch durch haptische Rückmeldung realisiert werden. Anstatt einen Ton zu signalisieren, vibriert das Smartphone oder Mobiltelefon. Entsprechend der Ausrichtung ändert sich das Vibrationsmuster. Ist der Benutzer beispielsweise exakt auf den Zielort ausgerichtet, so kann das Smartphone oder Mobiltelefon durchgehend vibrieren. Je weiter die Ausrichtung vom gewünschten Zielort abweicht, desto länger werden die Pausen zwischen den einzelnen Vibrationen. Ist der Benutzer in die exakte Gegenrichtung ausgerichtet, so könnte die Vibration komplett abgeschaltet werden. Möglich ist auch eine Signalisierung mittels variierender Vibrationsintensität oder Ähnliches.

Neben der korrekten Ausrichtung auf einen gewünschten Zielort kann die Applikation auch die Entfernung zu dem gewünschten Zielort angeben. Dies kann z.B. in Metern, Kilometern oder ähnlichen Entfernungsangaben geschehen. Die Entfernung kann auch mittels Sprachausgabe mitgeteilt werden.

Wie oben beschrieben, dient die Applikation zur Findung einer genauen Ausrichtung auf einen gewünschten Zielort. Sollte der direkte Weg, also die Luftlinie, durch Hindernisse versperrt sein, so ist es möglich, dass die Applikation eine Option zur Wegführung um das Hindernis bereitstellt. Ein Hindernis kann hierbei z.B. ein Gebäude, ein Baum oder Ähnliches sein. Dass der Weg durch ein oder mehrere Hindernisse versperrt ist, kann dem Benutzer beispielsweise auch durch entsprechendes Einfärben eines Pfeils signalisiert werden. Zur Detektion der Hindernisse können z.B. Kartendaten, auf der die Hindernisse verzeichnet sind, eingesetzt werden. Die optionale Wegführung, z.B. kartenbasiert, zeigt dem Benutzer den schnellsten und kürzesten Weg zum gewünschten Zielort an. Dies kann z.B. auf Basis einer Karte geschehen. Der einzuschlagende Weg wird z.B. auf der Karte farblich hervorgehoben.

Wünschenswert ist auch eine Kombination aus der erfindungsgemäßen Applikation und einer kartenbasierten Wegführung. Speziell die Fußgängernavigation kann dadurch verbessert werden. Oftmals ist bei Aufruf einer Fußgängernavigations-Applikation die Ausrichtung auf das gewünschte Ziel nicht bekannt. Dadurch kommt es vor, dass der Benutzer versehentlich zuerst mehrere Meter in eine falsche Richtung läuft bis die Navigationsapplikation den Fehler bemerkt und den Benutzer auffordert, die Richtung zu ändern. Durch Kopplung mit der erfindungsgemäßen Applikation kann dieser Effekt verhindert werden. Direkt beim Starten der Navigationsanwendung kann der Benutzer die korrekte Richtung des Zielorts ermitteln und erspart sich dadurch gegebenenfalls mehrere Meter an Umweg.

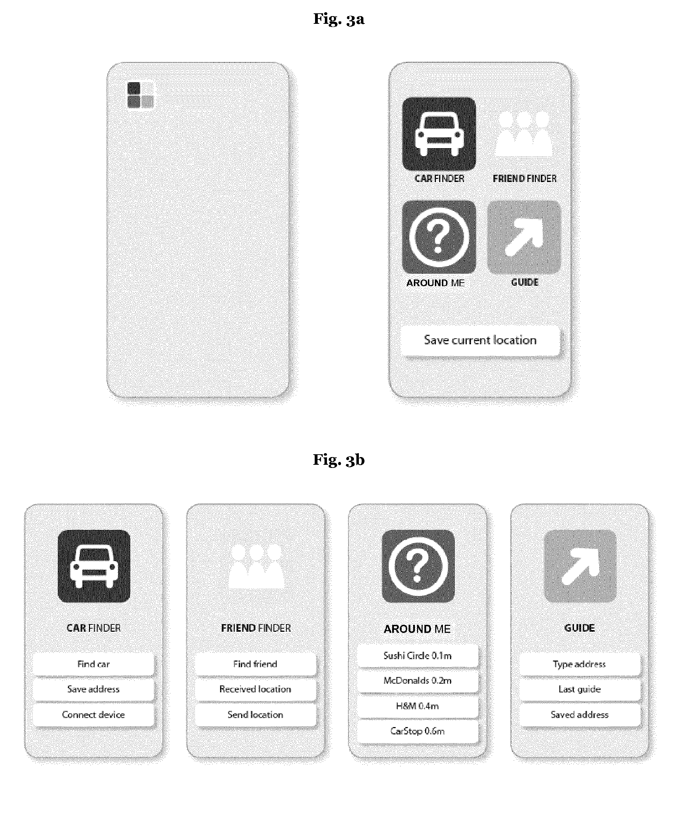

In den Fig. 3a-3c sind Bildschirmansichten einer beispielhaften "App" für ein Smartphone (oder ähnliches mobiles elektronisches Gerät) gemäß einer Ausführungsform der Erfindung dargestellt. Fig. 3a zeigt auf der linken Seite ein Symbol ("Icon") der erfindungsgemäßen App und auf der rechten Seite einen Startbildschirm der App. Der Startbildschirm weist wiederum Symbole für die Funktionen "Car Finder", "Friend Finder", "Around Me" und/oder "Guide" auf, sowie ein Betätigungselement zum speichern der aktuellen Position ("Save current location").

Fig. 3b zeigt beispielhafte Bildschirme dieser Funktionen. Die "Car Finder"-Funktion umfasst Icons zum Auffinden des Fahrzeugs ("Find car"), zum Speichern der Adresse ("save address") und/oder zum Verbinden mit einem zweiten Gerät ("Connect device"). Die "Friend Finder"-Funktion umfasst Icons zum Auffinden einer anderen Person ("Find friend"), zum Orten einer empfangenen Position ("Received location") und/oder zum Senden der eigenen Position ("Send location"). Die "Around me"-Funktion umfasst Icons mit gegenwärtig in der nähe befindlichen möglichen Zielorten. Die "Guide"-Funktion umfasst Icons zum Eingeben einer Adresse ("Type address"), zum Abrufen des letzten Guides ("Last guide") und zum Abrufen einer gespeicherten Adresse ("Saved address"). Fig. 3c zeigt auf der linken Seite einen beispielhaften Bildschirm, auf dem durch einen (grünen) Pfeil die Richtung zum Zielort angezeigt wird, wenn der direkte Weg frei ist. Ferner wird die Entfernung zum Zielort angezeigt (im Beispiel 70 Meter). Auf der rechten Seite zeigt ein (roter) Pfeil an, dass der direkte Weg zum Zielort durch ein oder mehrere Hindernisse versperrt ist. Zusätzlich zur Luftlinie (im Beispiel 70 Meter) wird auch die Länge des "Umgehungswegs" angezeigt (im Beispiel 120 Meter), sowie ein Icon ("Guide me"), mit welchem eine Zielführung gestartet werden kann (beispielsweise unter Verwendung der herkömmlichen Navigationsfunktion des Smartphones).

## Patentansprüche

1. Ein mobiles elektronisches Gerät (X), eingerichtet zum:
a. Empfangen eines Zielortes (C); und
b. Übermitteln eines Signals an einen Benutzer des mobilen elektronischen Geräts (X), wenn das mobile elektronische Gerät (X) auf den Zielort (C) zeigt unter Verwendung einer Kompassfunktion des mobilen elektronischen Geräts (X).

2. Das mobile elektronische Gerät (X) gemäß Anspruch 1, wobei das mobile elektronische Gerät (X) ein Fahrzeugschlüssel ist.

3. Das mobile elektronische Gerät (X) gemäß Anspruch 1, wobei das mobile elektronische Gerät (X) ein Smartphone oder Mobiltelefon ist.

4. Das mobile elektronische Gerät (X) gemäß einem der vorhergehenden Ansprüche, wobei das Signal ein Audiosignal, ein Vibrationssignal, ein Lichtsignal und/oder ein Anzeigesignal umfasst.

5. Das mobile elektronische Gerät (X) gemäß einem der vorhergehenden Ansprüche, ferner eingerichtet zum Angeben der Entfernung des Zielorts (C).

6. Das mobile elektronische Gerät (X) gemäß einem der vorhergehenden Ansprüche, wobei es den Zielort (C) durch manuelle Eingabe und/oder über eine Verbindung empfängt und/oder den eigenen Standort als späteren Zielort (C) benutzt.

7. Das mobile elektronische Gerät (X) gemäß einem der vorhergehenden Ansprüche, ferner eingerichtet zum Speichern des eigenen Standortes bei Unterbrechung einer Verbindung zu einem zweiten elektronischen Gerät (Y) und/oder beim Empfangen eines markanten Audiosignals, beispielsweise des Zuschlagens einer Autotür.

8. Das mobile elektronische Gerät (X) gemäß einem der vorhergehenden Ansprüche, wobei das mobile elektronische Gerät (X) mit zumindest einem zweiten elektronischen Gerät (Y) mit einem integrierten Chip zur Positionsbestimmung des Zielorts (C) zusammenarbeitet.

9. Das mobile elektronische Gerät (X) gemäß Anspruch 8, wobei das zweite elektronische Gerät (Y) ein Smartphone oder Mobiltelefon (Y5) ist.

10. Das mobile elektronische Gerät (X) gemäß Anspruch 8 oder 9, wobei das zweite elektronische Gerät (Y) einen Anhänger (Y3), ein Band (Y3) oder eine andere tragbare Form aufweist.

11. Das mobile elektronische Gerät (X) gemäß einem der Ansprüche 8-10, wobei das zweite elektronische Gerät (Y) in einem Auto (Y6) integriert ist, vorzugsweise in einem Navigations- oder Radiogerät.

12. Das mobile elektronische Gerät (X) gemäß einem der Ansprüche 8-11, wobei das zweite elektronische Gerät (Y) einen Aufkleber (Y4) mit Solarfunktion umfasst.

13. Das mobile elektronische Gerät (X) gemäß einem der vorhergehenden Ansprüche, ferner eingerichtet zum Anzeigen, ob der Weg zum Zielort (C) frei oder durch ein oder mehrere Hindernisse versperrt ist.

14. Das mobile elektronische Gerät (X) gemäß Anspruch 13, ferner eingerichtet zum Bereitstellen einer Wegführung um das eine oder die mehreren Hindernisse.

15. Eine Applikation für ein mobiles elektronisches Gerät (X) gemäß einem der vorhergehenden Ansprüche 1-14, insbesondere für ein Smartphone oder Mobiltelefon (X).
